Europäisches Patentamt

**European Patent Office**

**Office européen des brevets**

(19)

(11) Veröffentlichungsnummer: **0 072 415**
**B1**

(12)    **EUROPÄISCHE PATENTSCHRIFT**

(45) Veröffentlichungstag der Patentschrift:
**23.01.85**

(51) Int. Cl.⁴: **F 16 C 13/04,** F 27 B 7/22

(21) Anmeldenummer: **82105790.8**

(22) Anmeldetag: **29.06.82**

(54)    **Drehtrommel.**

(30) Priorität: **18.08.81 DE 3132578**

(43) Veröffentlichungstag der Anmeldung:
**23.02.83 Patentblatt 83/8**

(45) Bekanntmachung des Hinweises auf die Patenterteilung:
**23.01.85 Patentblatt 85/4**

(84) Benannte Vertragsstaaten:
**BE DE FR GB**

(56) Entgegenhaltungen:
**CH - A - 52 445**
**DE - B - 9 039**
**DE - B - 1 243 924**
**DE - B - 1 273 268**
**DE - B - 2 105 227**
**DE - C - 318 569**
**DE - C - 924 077**
**DK - C - 68 786**

(73) Patentinhaber: **Krupp Polysius AG,**
**Graf-Galen-Strasse 17, D-4720 Beckum (DE)**

(72) Erfinder: **Mollenkopf, Hans, Dipl.-Ing., Regelkamp 6,**
**D-4720 Beckum (DE)**
Erfinder: **Wurr, Jürgen, Dipl.-Ing., An den Weiden 21,**
**D-4722 Ennigerloh (DE)**
Erfinder: **Körting, Reinhard, Ing. grad., Amtmann Brüning**
**Strasse 23a, D-4722 Ennigerloh (DE)**

(74) Vertreter: **Tetzner, Volkmar, Dr.-Ing. Dr. Jur.,**
**Van-Gogh-Strasse 3, D-8000 München 71 (DE)**

## Beschreibung

Die Erfindung betrifft eine Drehtrommel mit auf dem Trommelmantel angeordnetem Zahnkranz, der sich an mehreren Umfangsstellen auf dem Trommelmantel über ein Brückenglied abstützt, das zwei in axialem Abstand angeordnete, mit dem Trommelmantel verschweißte Bügel und ein die Bügel verbindendes, in radialem Abstand vom Trommelmantel angeordnetes Querblech enthält. Eine derartige Trommel ist aus der DE-B-M 9 039 v/80C bekannt.

Eine Drehtrommel der genannten Art kann für verschiedene Verwendungszwecke ausgebildet sein, beispielsweise als Trockentrommel, Mischtrommel, Trommelmühle, Drehrohr eines Drehrohrofens usw. Der Antrieb einer solchen Trommel erfolgt über den auf dem Trommelmantel angeordneten Zahnkranz, dessen Zähne mit wenigstens einem Antriebszahnrad in Eingriff stehen.

Bei einer aus der Praxis bekannten Ausführungsform der eingangs genannten Art ist jedes Querblech eines Brückengliedes mit seinen beiden Enden auf die entsprechenden Bügel aufgeschweißt, während der Zahnkranz sich auf dem mittleren Bereich der Querbleche abstützt und dort angeschraubt ist.

Bei Drehtrommeln, die für eine Wärmebehandlung irgendeines darin befindlichen Gutes bestimmt sind und die daher in irgendeiner Weise von innen beheizt werden, wird während der Wärmebehandlung auch zwangsläufig der Trommelmantel auf eine Temperatur erwärmt, die — aufgrund des radialen Abstandes des Zahnkranzes vom Trommelmantel — deutlich höher liegt als die Temperatur des Zahnkranzes. Bedingt durch die sich ergebende größere radiale Wärmeausdehnung des Trommelmantels gegenüber dem Zahnkranz kommt es zu unerwünschten Durchbiegungen und Verformungen der mit den Bügeln fest verbundenen Querbleche. Hierbei ist jedoch zu berücksichtigen, daß jedes Querblech einen bestimmten radialen Abstand vom Ofenmantel aufweist und sich daher nicht so stark erwärmt wie der Trommelmantel, mit der Folge, daß der Trommelmantel sich in axialer Richtung stärker ausdehnt als das Querblech. Diese unterschiedlichen Wärmeausdehnungen führen zu weiteren Beanspruchungen der Querbleche, der Bügel und der Verbindungsschweißnähte.

Der Erfindung liegt daher die Aufgabe zugrunde, bei einer Drehtrommel der eingangs genannten Art insbesondere die Ausbildung der Brückenglieder in einfacher Weise derart zu verbessern, daß die durch die erwähnten Wärmeausdehnungen hervorgerufenen unerwünschten Verformungen und Beanspruchungen von ihnen fern gehalten werden.

Diese Aufgabe wird erfindungsgemäß dadurch gelöst, daß das Querblech mit dem einen Bügel (des Brückengliedes) fest und mit dem anderen Bügel in axialer Richtung gleitbeweglich verbunden ist.

Bei dieser erfindungsgemäßen Ausführungsform der Brückenglieder der Drehtrommel werden einerseits die Vorteile der erwähnten bekannten Ausführung beibehalten, indem nämlich durch die Ausbildung und den gewählten radialen Abstand der den Zahnkranz unmittelbar abstützenden Querbleche eine Wärmeübertragung vom Trommelmantel auf den Zahnkranz auf ein Minimum herabgesetzt wird und indem der Zahnkranz mit einer gewissen Biegeelastizität von den Querblechen getragen wird. Darüber hinaus wird andererseits den erfindungsgemäß mit den zugehörigen Bügeln verbundenen Querblechen eine durch Wärmeeinwirkung bedingte Längenänderung ohne wesentliche Behinderungen gestattet, so daß die eingangs erwähnten, unerwünschten Verformungen und Beanspruchungen besonders in diesem Bereich jedes Brückengliedes mit Sicherheit vermieden werden. Diese Verbesserung der bekannten Brückenglieder läßt sich auf konstruktiv äußerst einfache Weise erreichen.

Weitere Vorteile und Einzelheiten der Erfindung sind Gegenstand der Unteransprüche sowie der folgenden Beschreibung einiger in der Zeichnung veranschaulichter Ausführungsbeispiele. Es zeigt

Fig. 1 eine Teil-Querschnittsansicht durch eine Drehtrommel im Bereich eines auf dem Trommelmantel angeordneten Zahnkranzes;

Fig. 2 eine Detail-Schnittansicht (entlang Linie II-II in Fig. 1) im Bereich eines Brückengliedes;

Fig. 3 eine Aufsicht auf das in Fig. 2 gezeigte Brückenglied;

Fig. 4 eine Schnittansicht durch das Brückenglied entlang der Linie IV-IV in Fig. 2;

Fig. 5 eine Teil-Aufsicht auf ein Brückenglied gemäß einer etwas modifizierten anderen Ausführungsform;

Fig. 6 eine Teil-Schnittansicht entlang der Linie VI-VI in Fig. 5.

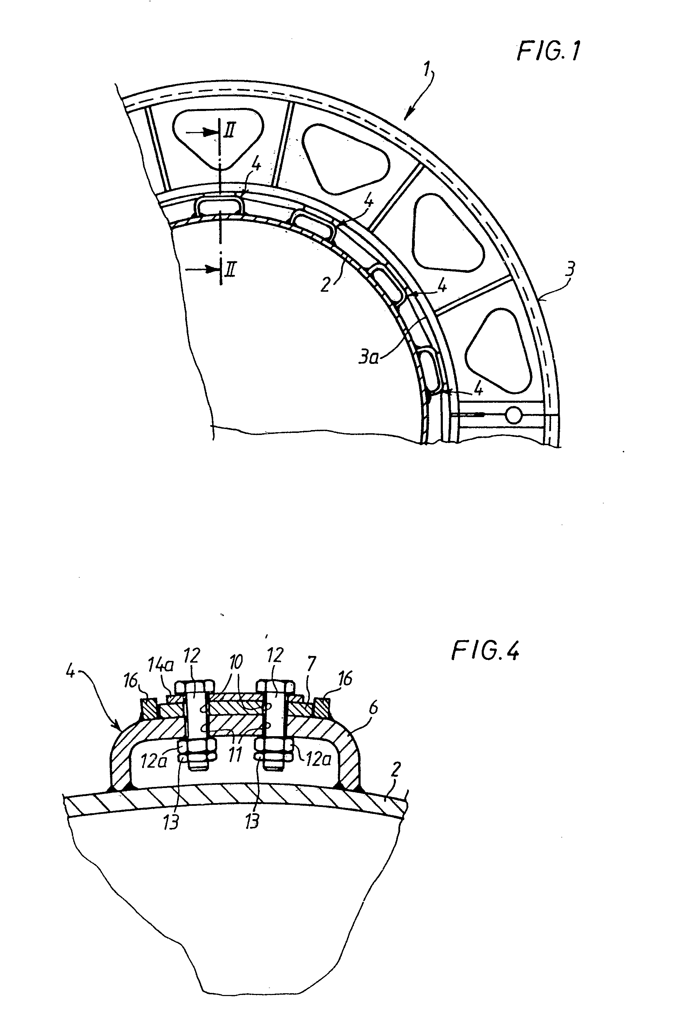

Die in Fig. 1 in einem Teil-Querschnitt dargestellte Drehtrommel 1 besitzt einen Trommelmantel 2, auf dem ein üblicher Zahnkranz 3 so angeordnet ist, daß sein Innenumfang einen radialen Abstand von der Außenseite des Trommelmantels 2 aufweist.

Der Zahnkranz 3 wird an mehreren Umfangsstellen (mit seinem Innenumfang 3a) auf dem Trommelmantel 2 über ein Brückenglied 4 abgestützt, wobei die Anzahl der Brückenglieder 4 für alle Umfangs-Abstützstellen des Zahnkranzes 3 gleichmäßig über den Umfang des Trommelmantels 2 verteilt ist.

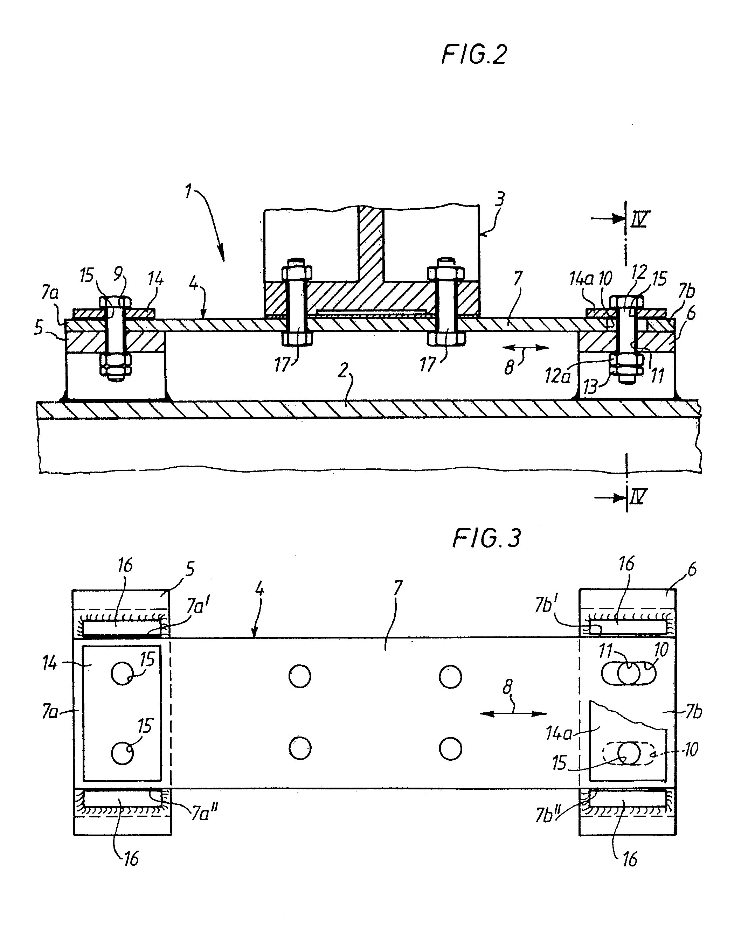

Die konstruktive Ausbildung jedes Brückengliedes 4 sei im folgenden anhand der Fig. 2 bis 4 erläutert.

Jedes Brückenglied 4 enthält zwei — bezogen auf den Trommelmantel 2 — in axialem Abstand voneinander angeordnete, mit dem Trommelmantel 2 verschweißte, gleichartig geformte Bügel 5, 6 sowie ein die Bügel 5, 6 verbindendes Brücken- bzw. Querblech 7, das in radialem Ab-

stand vom Trommelmantel 2 angeordnet ist.

Dieses Querblech 7 ist mit seinen Enden 7a und 7b auf den zugehörigen Bügel 5 bzw. 6 angeordnet und trägt in seinem mittleren Abschnitt den Zahnkranz 3 (vgl. Fig. 2).

Damit von dem Querblech 7 die weiter oben erwähnten Längenänderungen (durch auftretende Wärmedehnungen) im wesentlichen ohne Behinderung (und somit ohne Verformungen und unerwünschte Beanspruchungen) aufgenommen werden können, ist das Querblech 7 mit seinem einen Ende 7a fest und mit seinem anderen Ende 7b entsprechend Doppelpfeil 8 in axialer Richtung (bezogen auf den Trommelmantel 2) gleitbeweglich mit dem jeweils zugehörigen Bügel 5 bzw. 6 verbunden. Hierbei wird es vorgezogen, das Ende 7a des Querbleches 7 fest mit dem zugehörigen Bügel 5 zu verschrauben (Schraube 9), da sich hier eine besonders günstige Montage- bzw. Demontagemöglichkeit ergibt. Es ist selbstverständlich auch denkbar, diese feste Verbindung zwischen dem Querblechende 7a und dem zugehörigen Bügel 5 durch Verschweißen oder Vernieten herzustellen.

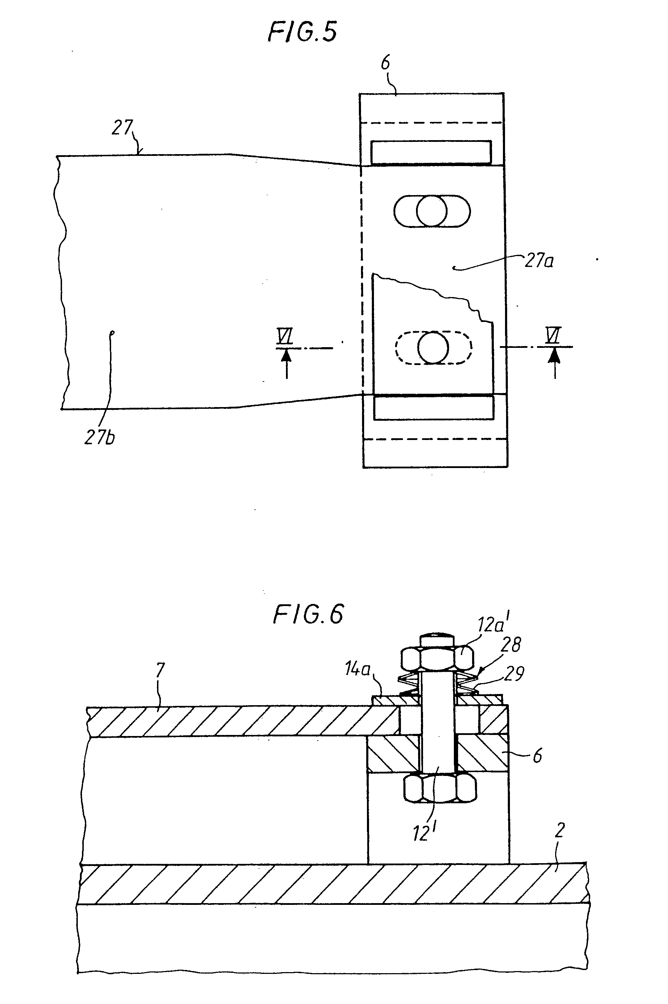

Das andere Ende 7b des Querbleches 7 ist mit dem zugehörigen Bügel 6 durch eine Langloch-Schrauben-Verbindung gleitbeweglich verbunden, die für jedes Querblech 7 wenigstens zwei in Umfangsrichtung des Trommelmantels 2 mit Abstand voneinander angeordnete, axial verlaufende Langlöcher 10, im zugehörigen Bügel 6 zwei entsprechend angepaßte zylindrische Bohrungen 11 sowie die zugehörigen Verbindungsschrauben 12 enthält. Gemäß den Fig. 2 und 4 sind die Muttern 12a der Verbindungsschrauben 12 durch Kontermuttern 13 gesichert.

An jedem Ende 7a, 7b des Querbleches 7 ist der jeweiligen Schraubverbindung eine die Schraubenlöcher überspannende gemeinsame Zusatzplatte 14, 14a zugeordnet, die ebenfalls mit zylindrischen Bohrungen versehen sind, durch die die entsprechenden Verbindungsschrauben 9 bzw. 12 ebenfalls hindurchgesteckt sind.

Da die Schraubverbindungen an den Enden 7a, 7b jedes Querbleches 7 das ganze vom Zahnkranz 3 ausgehende Drehmoment übertragen müssen, werden die entsprechenden Schrauben 9 bzw. 12 sehr stark auf Abscherung beansprucht. Um dies zu vermeiden, ist es erforderlich, daß jedes Ende 7a, 7b der Querbleche 7 — in Trommelumfangsrichtung betrachtet — an beiden Seitenrändern 7a', 7a'' bzw. 7b', 7b'' durch zwei zusätzlich auf den entsprechenden Bügel 5 bzw. 6 aufgeschweißte Widerlager 16 abgestützt ist, die lose mit den genannten Seitenrändern der Querbleche 7 in Berührung stehen und durch verhältnismäßig einfache, in Achsrichtung der Trommel 2 ausgerichtete gerade Führungsklötze gebildet werden. Hierdurch besteht eine äußerst zuverlässige zusätzliche Abstützung der Querblechenden 7a, 7b in Trommelumfangsrichtung, ohne daß dadurch die Gleitbeweglichkeit des einen Querblechendes 7b beeinträchtigt wird.

Während im zuvor erläuterten Ausführungsbeispiel jedes Querblech 7 im Grundriß eine im wesentlichen langgestreckte Rechteckform besitzt (vgl. Fig. 3), kann bei einer Modifizierung gemäß Fig. 5 jedes Querblech 27 im Bereich seiner beiden Enden (z. B. 27a) schmaler ausgeführt sein als in seinem mittleren Bereich (z. B. 27b). Die die Enden abstützenden Bügel (z. B. Bügel 6) und die Schraubverbindungen im Bereich der Enden des Querbleches können ansonsten in der gleichen Form vorgesehen sein, wie es anhand der Fig. 2 bis 4 ausführlich erläutert worden ist.

Fig. 6 zeigt in einem Teilquerschnitt noch eine weitere Variante zu der Ausbildung gemäß Fig. 5. Diese Ausführungsvariante bezieht sich lediglich auf die Ausbildung der Langloch-Schrauben-Verbindung 28, bei der die Verbindungsschrauben 12' für Querblech 7 und Bügel 6 im Vergleich zu der Schraube 12 im Beispiel gemäß Fig. 2 bis 4 etwas länger gehalten ist und zwischen jeder Schraubenmutter 12a' und der zugehörigen Zusatzplatte 14a noch ein Satz Tellerfedern 29 angeordnet ist.

Wie bereits weiter oben erwähnt worden ist, wird der Zahnkranz 3 jeweils vom mittleren Abschnitt (axial zum Trommelmantel 2 gesehen) der Querbleche 7 getragen. Der Zahnkranz 3 ist dabei durch Schrauben 17 (vgl. Fig. 2) fest mit den Querblechen 7 verbunden.

Um die Beanspruchung der Querbleche 7 bei Durchbiegung im Betriebszustand der Drehtrommel möglichst klein zu halten, ist es besonders vorteilhaft, bei der Befestigung der Brückenglieder 4 (gemäß der obigen Ausführungen) auf dem Trommelmantel 2 darauf zu achten, daß die Querbleche 7 im kalten Zustand des Trommelmantels 2 um den zu erwartenden Betrag (Ausmaß) der radialen Betriebs-Wärmeausdehnung in radialer Richtung gegen den Zahnkranz 3 vorgespannt werden. Bei Anwendung dieses Befestigungsverfahrens wird erreicht, daß die Querbleche 7 dann, wenn die Drehtrommel 1 bzw. deren Mantel 2 die normale Betriebstemperatur erreicht hat, annähernd gerade sind.

## Patentansprüche

1. Drehtrommel mit auf dem Trommelmantel (2) angeordnetem Zahnkranz (3), der sich an mehreren Umfangsstellen auf dem Trommelmantel über ein Brückenglied (4) abstützt, das zwei in axialem Abstand angeordnete, mit dem Trommelmantel verschweißte Bügel (5, 6) und ein die Bügel verbindendes, in radialem Abstand vom Trommelmantel angeordnetes Querblech (7) enthält, dadurch gekennzeichnet, daß das Querblech (7) mit dem einen Bügel (5) fest und mit dem anderen Bügel (6) in axialer Richtung (8) gleitbeweglich verbunden ist.

2. Drehtrommel nach Anspruch 1, dadurch gekennzeichnet, daß die gleitbewegliche Verbindung jedes Querbleches (7) mit dem zugehörigen Bügel (6) durch eine Langloch-Schrauben-Verbindung gebildet wird.

3. Drehtrommel nach Anspruch 2, dadurch gekennzeichnet, daß für die Langloch-Schrauben-Verbindung in jedem Querblech (7) wenigstens zwei in Umfangsrichtung des Trommelmantels (2) einen Abstand voneinander aufweisende, axial verlaufende Langlöcher (10), im zugehörigen Bügel (6) zwei entsprechende zylindrische Bohrungen (11) sowie die zugehörigen Verbindungsschrauben (12, 12') vorgesehen sind.

4. Drehtrommel nach Anspruch 3, dadurch gekennzeichnet, daß den Verbindungsschrauben (12') Tellerfedern (29) zugeordnet sind.

5. Drehtrommel nach den Ansprüchen 3 und/ oder 4, dadurch gekennzeichnet, daß die Verbindungsschrauben (12, 12') Kontermuttern (13) aufweisen.

6. Drehtrommel nach einem der vorhergehenden Ansprüche, dadurch gekennzeichnet, daß an jedem Ende (7a, 7b) eines Querbleches (7) der Schraubverbindung eine die Schraubenlöcher überspannende, gemeinsame Zusatzplatte (14, 14a) mit zylindrischen Bohrungen (15) angeordnet ist, durch die die Verbindungsschrauben (9, 12, 12') ebenfalls hindurchgeführt sind.

7. Drehtrommel nach wenigstens einem der vorhergehenden Ansprüche, dadurch gekennzeichnet, daß jedes Ende (7a, 7b) eines Querbleches (7) — in Trommelumfangsrichtung betrachtet — an beiden Seitenrändern (7a', 7a'', 7b', 7b'') durch zusätzlich auf dem entsprechenden Bügel (5, 6) angebrachte Widerlager (16) abgestützt ist, die lose mit den genannten Seitenrändern des Querbleches in Berührung stehen.

8. Drehtrommel nach Anspruch 7, dadurch gekennzeichnet, daß die Widerlager (16) für die Querbleche (7) durch auf den entsprechenden Bügeln (5, 6) aufgeschweißte, in Achsrichtung der Trommel (2) ausgerichtete gerade Führungsklötze (16) gebildet werden.

9. Drehtrommel nach wenigstens einem der vorhergehenden Ansprüche, dadurch gekennzeichnet, daß die Querbleche (27) im Bereich ihrer Enden (27a) schmaler ausgeführt sind als im mittleren Bereich (27b).

10. Drehtrommel nach wenigstens einem der vorhergehenden Ansprüche, dadurch gekennzeichnet, daß die Querbleche (7) an ihren den gleitbeweglichen Verbindungen entgegengesetzten Enden (7b) mit den zugehörigen Bügeln (5) fest verschraubt, verschweißt oder vernietet sind.

11. Verfahren zur Befestigung der Brückenglieder auf dem Mantel einer Drehtrommel gemäß wenigstens einem der Ansprüche 1 bis 10, dadurch gekennzeichnet, daß die Querbleche im kalten Zustand des Trommelmantels um das zu erwartende Ausmaß der radialen Betriebs-Wärmeausdehnung in radialer Richtung gegen den Zahnkranz vorgespannt werden.

**Claims**

1. Rotary drum having a toothed rim (3) which is arranged on the drum shell (2) and is supported at a number of points on the periphery of the drum shell by means of a bridge member (4) which contains two axially spaced clips (5, 6) which are welded to the drum shell and a cross plate (7) which connects the clips and is arranged radially distant from the drum shell, characterised in that the cross plate (7) is firmly connected to one clip (5) and is connected to the other clip (6) so as to be slidably movable in the axial direction.

2. Rotary drum according to claim 1, characterised in that the sliding connection between each cross plate (7) and the associated clip (6) is formed by a slot-screw connection.

3. Rotary drum according to claim 2, characterised in that for the slot-screw connection each cross plate (7) is provided with at least two axially extending slots (10) which are spaced from each other on the peripheral direction of the drum shell (2) and two corresponding cylindrical holes (11) and the associated connecting screws (12, 12') are provided in the associated clip (6).

4. Rotary drum according to claim 3, characterised in that cups springs (29) are associated with the connecting screws (12').

5. Rotary drum according to claims 3 and/or 4, characterised in that the connecting screws (12, 12') have lock nuts (13).

6. Rotary drum according to one of the preceding claims, characterised in that a common plate (14, 14a) which spans the screw holes and has cylindrical holes (15) through which the corresponding connecting screws (9, 12, 12') can also be passed is arranged at each end (7a, 7b) of a cross plate (7) of the screw connection.

7. Rotary drum according to at least one of the preceding claims, characterised in that each end (7a, 7b) of a cross plate (7) — viewed in the peripheral direction of the drum — is supported on both lateral edges (7a', 7a'', 7b', 7b'') by abutments (16) additionally on the corresponding clip (5, 6), the abutments being loosely in contact with the said lateral edges of the cross plate.

8. Rotary drum according to claim 7, characterised in that the abutments (16) for the cross plates (7) are formed by straight guide blocks (16) which are welded onto the corresponding clips (5, 6) and aligned in the axial direction of the drum (2).

9. Rotary drum according to at least one of the preceding claims, characterised in that the cross plates (27) are narrower in construction in the region of their ends (27a) than in the central region (27b).

10. Rotary drum according to at least one of the preceding claims, characterised in that at their ends (7b) opposite to the sliding connections the cross plates (7) are firmly screwed, welded or riveted to the associated clips (5).

11. Method of fixing the bridge members to the shell of a rotary drum according to at least one of claims 1 to 10, characterised in that when the drum shell is in the cold state the cross plates are prestressed in the radial direction against the toothed rim by the expected amount of radial thermal expansion in use.

## Revendications

1. Tambour rotatif sur l'enveloppe (2) de laquelle est disposée une couronne dentée (3) qui prend appui en plusieurs emplacements de sa circonférence sur l'enveloppe du tambour par l'intermédiaire d'un groupe d'éléments d'assemblage en pont (4) qui comprend deux étriers (5, 6) placés à distance axiale l'un de l'autre et soudés sur l'enveloppe du tambour, ainsi qu'une tôle transversale (7) qui relie les étriers et qui est placée à distance radiale de l'enveloppe du tambour, caractérisé en ce que la tôle transversale (7) est fixée à demeure à l'un des étriers (5) et reliée à l'autre (6) de manière à pouvoir coulisser dans la direction de l'axe (8).

2. Tambour rotatif selon la revendication 1, caractérisé en ce que la liaison autorisant le coulissement de chaque tôle transversale (7) et de l'étrier correspondant (6) est formée d'un assemblage à boutonnières et boulons.

3. Tambour rotatif selon la revendication 2, caractérisé en ce que chaque assemblage à boutonnières et boulons comprend dans chaque tôle transversale (7) au moins deux boutonnières (10) orientées dans la direction de l'axe et placées à distance l'une de l'autre dans la direction de la circonférence de l'enveloppe (2) du tambour, dans chaque étrier (6) deux trous cylindriques correspondants (11), ainsi que les boulons correspondants (12, 12').

4. Tambour rotatif selon la revendication 3, caractérisé en ce que les boulons (12') sont combinés avec des rondelles Belleville (29).

5. Tambour rotatif selon les revendications 3 et/ou 4, caractérisé en ce que les boulons (12, 12') comprennent des contre-écrous (13).

6. Tambour rotatif selon l'une des revendications précédentes, caractérisé en ce que l'assemblage par boulonnage de chaque extrémité (7a, 7b) d'une tôle transversale (7) comprend une plaque auxiliaire commune (14, 14a) qui passe au-dessus des trous des boulons et qui comporte des trous cylindriques (15) dans lesquels passent également les boulons (9, 12, 12').

7. Tambour rotatif selon au moins l'une des revendications précédentes, caractérisé en ce que chaque extrémité (7a, 7b) d'une tôle transversale (7) prend appui sur les deux bords latéraux (7a', 7a'', 7b', 7b'') — considérés dans la direction de la circonférence du tambour — contre des butées (16) placées accessoirement sur l'étrier correspondant (5, 6) et entrant librement en contact avec lesdits bords latéraux de la tôle transversale.

8. Tambour rotatif selon la revendication 7, caractérisé en ce que les butées (16) des tôles transversales (7) sont formées de blocs rectilignes de guidage (16) fixés par soudage sur les étriers correspondants (5, 6) et orientés dans la direction de l'axe du tambour (2).

9. Tambour rotatif selon au moins l'une des revendications précédentes, caractérisé en ce que les extrémités (27a) des tôles transversales (27) sont plus étroites que leur partie médiane (27b).

10. Tambour rotatif selon l'une au moins des revendications précédentes, caractérisé en ce que l'extrémité (7b) des tôles transversales (7) située à l'opposée de la liaison autorisant le coulissement est fixée à l'étrier correspondant (5) par boulonnage, soudage ou rivetage.

11. Procédé de fixation des groupes d'éléments d'assemblage en pont sur l'enveloppe d'un tambour rotatif selon l'une au moins des revendications 1 à 10, caractérisé en ce que les tôles transversales sont mises sous tension initiale en direction radiale contre la couronne dentée, lorsque l'enveloppe du tambour est froide, dans une mesure correspondant à la valeur attendue de la dilatation thermique radiale en service.

FIG.1

FIG.4

FIG.2

FIG.3

*FIG.5*

*FIG.6*